## Europäisches Patentamt

## European Patent Office

## Office européen des brevets

(11) Publication number: **0 022 272**
**B1**

(12) **EUROPEAN PATENT SPECIFICATION**

(45) Date of publication of patent specification: **10.10.84**

(51) Int. Cl.³: **C 04 B 35/56, C 04 B 41/06**

(21) Application number: **80103858.9**

(22) Date of filing: **07.07.80**

(54) **Method of anti-corrosion protection of silicon carbide elements and apparatus for carrying out the method.**

(30) Priority: **07.07.79 PL 216964**

(43) Date of publication of application:
**14.01.81 Bulletin 81/02**

(45) Publication of the grant of the patent:
**10.10.84 Bulletin 84/41**

(84) Designated Contracting States:
**AT BE CH DE FR GB IT LI LU NL SE**

(56) References cited:
**DD-A- 136 611**
**DE-A-1 765 788**
**DE-A-2 353 551**
**DE-B-2 517 380**
**DE-C- 707 272**
**US-A-2 003 592**
**US-A-2 691 605**
**US-A-2 943 008**
**US-A-4 135 053**
**US-A-4 159 357**

(73) Proprietor: **Biuro Projektow Przemyslu Metali Niezelaznych "Bipromet" Katowice (PL)**

(72) Inventor: **Biolik, Felicjan**
**ul. Graniczna 58a/24**
**Katowice (PL)**
Inventor: **Morys, Zygmunt**
**ul. Zamenhoffa 16/3**
**Katowice (PL)**

(74) Representative: **Lehn, Werner, Dipl.-Ing. et al Hoffmann, Eitle & Partner Patentanwälte Arabellastrasse 4 (Sternhaus) D-8000 München 81 (DE)**

Courier Press, Leamington Spa, England.

## Description

This invention relates to a method of anti-corrosion protection of a silicon carbide element working in an oxidizing atmosphere and to apparatus for carrying out the method.

The heretofore known methods of anti-corrosion protection of silicon carbide elements working at elevated temperatures consist in coating the outer faces of the elements with D or L type glazes protecting the silicon carbide against oxidation, as recommended in a prospectus of the Morganite International Limited Company for the heating elements made of silicon carbide. A glaze coat on the entire surface of diverse ceramic articles working at very high temperatures as parts of gas turbines and simliar products, obtained by a multistage operation, is described in US—A—4 159 357. US—A—2 003 592 applies a layer of fine silicon carbide crystals bounded with a bonding agent. In the claims 3 and 4 of DE—A—2 353 551 there is mentioned the coating of the surface of a gas turbine runner with an impenetrable refractory ceramic, the gas turbine runner being made of two parts of ceramic material of different density.

On the other hand, the method according to DE—A—2 533 895 consists in impregnating the elements with a refractory material, preferably one containing molybdenum bisilicide together with silicon. It enables porosity of the elements to be decreased from 30% to approximately 5%, and thus greater resistance to corrosion to be obtained.

DD—A—136 611 proposes a two-step impregnation of silicon carbide heating elements, wherein the protective property is reached in a very short time. US—A—2 943 008 desribes batts supporting ceramic ware in kilns during burning, made from inter alia silicon carbide, wherein the upper surface or both the upper and the bottom surfaces are covered with a protective ceramic layer to prevent rapid oxidation.

Also known are (a) protective ceramic covers on graphite heating elements, e.g. according to DE—C—707 272, and (b) the shielding of entire heating elements by a neutral gas atmosphere, e.g. according to US—A—4 135 053.

All these methods of protecting silicon carbide elements aim to slow down the process of corrosion of porous ceramic materials, such as silicon carbide among others, working at elevated temperatures in oxygen containing atmosphere, this kind of corrosion occurring in the whole porous body of unprotected elements. The protective coats and shields substantially limit the oxygen penetration into the pores inside the elements.

It has now been discovered that under conditions of limited penetration of oxygen into the pores of a element made from silicon carbide, caused by the above-mentioned coatings and shields, there occurs another kind of corrosion of silicon carbide elements inside the body of the element at sites distant from the surface exposed to oxygen containing atmosphere.

This different kind of corrosion of silicon carbide elements appears at much lower temperatures than the previous one and leads to a very rapid destruction of the elements. It is apparently caused by carbon monoxide formed in the pores under conditions of a very small concentration of oxygen.

Thus the application of protective coats and shields, which are not perfectly gas-tight or have at least only one weak point, in conditions of long-term operation, is extremely detrimental to the silicon carbide elements.

Below is presented the process of corrosion of the silicon carbide elements in an oxidizing atmosphere and under the conditions of a limited penetration of oxygen to the pores of the elements, that is in the case of such an installation of the element that a portion of the total outer surface of the element has been isolated from the oxygen or air, such as e.g. a crucible for melting metals the inside of which is filled with metal and the outer face of which is heated, a thermocouple shield immersed in metal or a zinc rectification column of the New Jersey system or the side linings of aluminium reduction cells. Under conditions of a limited penetration of oxygen to pores of the element, carbon monoxide is produced as a result of the action of oxygen on the trace amounts of carbon which are always present in the silicon carbide elements thus leading to the formation of a strongly reducing atmosphere.

Carbon monoxide reacts with the silicon carbide according to the following formulae:

$$C+1/2\ O_2 \rightarrow CO$$
$$SiC+CO \rightarrow SiO+2\ C$$

---

$$SiC+1/2\ O_2 \rightarrow SiO+C,\ and$$
$$2\ SiO \rightarrow SiO_2+Si$$

As a result of these reactions, silicon dioxide and silicon are produced from the silicon monoxide and a portion of the said silicon monoxide is transformed to a solid phase of brown color.

The mixture of the said compounds remains partially in the pores of the element, whereas the remaining portion is deposited on the outer faces of the element.

In turn, the free carbon reacts with oxygen thus producing the carbon monoxide. The corrosion of silicon carbide elements according to this pattern begins at a temperature as low as 550°C.

The corrosion rate is dependent, first of all, on the installation of the element and its average working temperature. As an example, with the batt according to US—A—2 943 008, the unprotected edges of the batt lead to such corrosion mainly in the center part of the batt, where the penetration of oxygen is limited to the greatest extent.

The invention intends an effective and easily workable anti-corrosion protection of silicon carbide elements working in an oxidizing atmosphere.

According to one aspect of the invention, there is provided a method of anti-corrosion protection of a silicon carbide element working in an oxidizing atmosphere characterised in that the formation of carbon monoxide in the pores of the element is prevented by protection of at least a portion of the outer surface of the element by means of a gas-tight shield member, those portions of the element which are not covered by said gas-tight shield member being covered by a molten substance.

According to another aspect of the invention, there is provided apparatus for carrying out the method of said one aspect, the apparatus comprising a silicon carbide element, a gas-tight shield member arranged to protect at least a portion of the outer surface of said silicon carbide element from the corrosive action of an oxidizing atmosphere, wherein those portions of said silicon carbide element which are not protected by said gas-tight shield member are covered by a molten substance.

The shield member can be made of steatite, porcelain, melted ceramic materials, or metal, particularly alloy steel. Molten substances, preferably metals, salts and glasses, can also be used to this aim.

The method according to this invention may also utilize a protective atmosphere, preferably nitrogen, in direct proximity to a portion of the surface of the element.

Some advantages of the invention are an increased scope of industrial application of the silicon carbide elements, for instance for the side lining of electrolysers for the manufacture of aluminium, for the tapping holes and spouts of the melting and settling furnaces, as well as a considerable prolongation of the service life of said elements, and particularly those used in the crucibles for the melting furnaces, shelves for the rectification columns of the New Jersey system, for thermocouples, or the fittings of the gas burners.

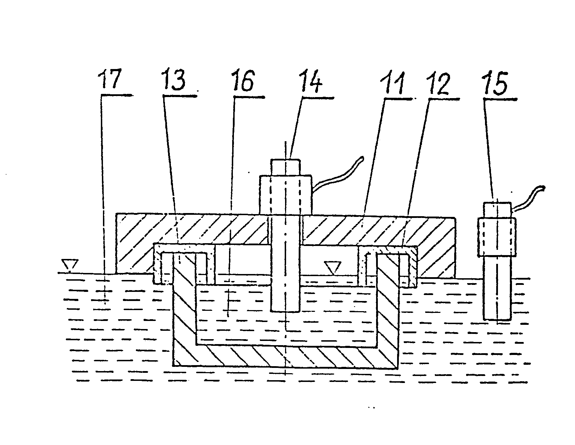

The method according to the invention will be explained in more detail on the basis of exemplary embodiments with reference to the accompanying drawing, which shows the anti-corrosion protection of a heating element made of silicon carbide in an electric resistance furnace for melting zinc with direct heating of the zinc bath.

The illustrated embodiment of the method according to this invention relates to a heating element used in the electric resistance furnaces for melting zinc with a direct heating of the zinc bath and consisting of a ceramic weight 11, a porcelain ring shield 12, a crucible 13 made of silicon carbide, current conductors 14 and 15, a contact metal 16, as well as a zinc bath 17, wherein the crucible 13 has been protected against corrosion by means of the porcelain ring shield 12 being a perfectly gas-tight shield protruding from the zinc bath 17 over the rim of the crucible 13, the bottom edges of the said porcelain ring 12 being immersed in the contact metal 16 and the zinc bath 17.

This invention is also applicable to a crucible furnace for melting aluminium consisting of a casing shield, cover shield, crucible, metallic heating element, gas supply system, melted aluminium, and a heating room wherein the crucible made of silicon carbide has been protected against corrosion by supplying pure nitrogen as a protective atmosphere to the heating room via the gas supply system.

Shortly summarized, the invention relates to a method of anti-corrosive protection of silicon carbide elements working in an oxidizing atmosphere, in which method the formation of carbon monoxide in the pores of the element is prevented by enveloping the portion exposed to the oxygen containing atmosphere at the outer faces of the element with perfectly gas-tight shields. Such shields can be made of steatite, porcelain, ceramic materials or metals, particularly alloy steels. The shield can also be made of substances in molten or liquid condition, preferably metals, salts and glasses.

A protective atmosphere, preferably nitrogen, may be provided in direct proximity to a portion of the outer faces of the element.

The invention is applicable to all elements made form silicon carbide and to all elements containing silicon carbide, and aims to prevent the decomposition of silicon carbide by carbon monoxide.

## Claims

1. Method of anti-corrosion protection of a silicon carbide element (13) working in an oxidizing atmosphere characterized in that the formation of carbon monoxide in the pores of the element (13) is prevented by protection of at least a portion of the outer surface of the element (13) by means of a gas-tight shield member (12, 16, 17), those portions of the element which are not protected by said gas-tight shield member being covered by a molten substance.

2. Method according to claim 1, characterized in that said shield member (11, 12) is of ceramic material.

3. Method according to claim 1, characterized in that said shield member is of metal.

4. Method according to claim 3 characterized in that said metal is alloy steel.

5. Method according to any one of claims 1 to 4 characterized in that space between said shield member and said element is filled with a molten substance and/or with a protective atmosphere.

6. Method according to claim 5 wherein said protective atmosphere is of nitrogen.

7. Apparatus specifically designed for carrying out the method according to claim 1 comprising a silicon carbide element, a gas-tight shield member arranged to protect at least a portion of the outer surface of said silicon carbide element from the corrosive action of an oxidizing atmosphere, wherein those portions of said silicon carbide element which are not protected by said gas-tight shield member are covered by a molten substance.

## Revendications

1. Procédé de protection anti-corrosion d'un élément (13) en carbure de silicium travaillant dans une atmosphère oxydante caractérisé en ce qu'on empêche la formation de monoxyde de carbone dans les pores de cet élément (13) par la protection d'au moins une partie de la surface extérieure dudit élément (13) à l'aide d'un organe protecteur étanche aux gaz (12, 16, 17), les parties de cet élément qui ne sont pas protégées par cet organe protecteur étanche aux gaz étant couvertes par une substance en fusion.

2. Procédé selon la revendication 1 caractérisé en ce que l'organe protecteur (11, 12) est en céramique.

3. Procédé selon la revendication 1 caractérisé en ce que l'organe protecteur est en métal.

4. Procédé selon la revendication 3 caractérisé en ce que le métal est un acier allié.

5. Procédé selon l'une quelconque des revendications 1 à 4 caractiérisé en ce que l'espace entre ledit organe protecteur et ledit élément est rempli d'une substance en fusion et/ou d'une atmosphère protectrice.

6. Procédé selon la revendication 5 caractérisé en ce que l'atmosphère protectrice est de l'azote.

7. Appareil spécifiquement conçu pour la mise en oeuvre du procédé selon la revendication 1 comprenant un élément en carbure de silicium, un organe protecteur étanche aux gaz disposé pour protéger contre l'action corrosive d'une atmosphère oxydante au moins une partie de la surface extérieure de ce élément en carbure de silicium, dans lequel les parties dudit élément en carbure de silicium qui ne sont pas protégées par ledit organe protecteur étanche aux gaz sont couvertes d'une substance en fusion.

## Patentansprüche

1. Verfahren zum Schützen vor Korrosion von Siliziumkarbidelementen, die in einer oxidierenden Atmosphäre eingesetzt werden, dadurch gekennzeichnet, daß das Ausbilden von Kohlenstoffmonoxid in den Poren des Elementes (13) dadurch verhindert wird, daß zumindest ein Abschnitt der Außenfläche des Elementes (13) mittels eines gasdichten Abschirmteiles (12, 16, 17) geschützt wird, und daß solche Abschnitte des Elementes, welche nicht durch das gasdichte Abschirmteil geschützt sind, durch eine geschmolzene Substanz abgedeckt sind.

2. Verfahren nach Anspruch 1, dadurch gekennzeichnet, daß das Abschirmteil (11, 12) aus keramischem Material besteht.

3. Verfahren nach Anspruch 1, dadurch gekennzeichnet, daß das abschirmteil aus Metall besteht.

4. Verfahren nach Anspruch 3, dadurch gekennzeichnet, daß das Metall eine Stahllegierung ist.

5. Verfahren nach einem der Ansprüche 1 bis 4, dadurch gekennzeichnet, daß der Raum zwischen dem Abschirmteil und dem Element mit einer geschmolzenen Substanz und/oder einer Schutzatmosphäre gefüllt wird.

6. Verfahren nach Anspruch 5, dadurch gekennzeichnet, daß die Schutzatmosphäre eine Stickstoffatmosphäre ist.

7. Vorrichtung, insbesondere zum Durchführen des Verfahrens nach Anspruch 1 mit einem Siliziumkarbidelement, einem so angeordneten gasdichten Abschirmteil, daß es zumindest einen Abschnitt der Außenfläche des Siliziumkarbidelementes vor einer Korrosionswirkung der oxidierenden Atmosphäre schützt, wobei solche Abschnitte des Siliziumkarbidelementes, welche nicht durch das gasdichte Abschirmteil geschützt sind, durch eine geschmolzene Substanz abgedeckt sind.